# EUROPEAN PATENT APPLICATION

(11) **EP 3 855 436 A1**
(43) Date of publication of application: **28.07.2021**
(21) Application number: 20217060.1
(22) Date of filing: 23.12.2020
(51) Int. Cl.: G11B 7/007, G11B 7/08, G11B 7/09

(54) **METHOD AND DEVICE FOR ACCURATELY DETECTING AND CONTROLLING POSITION OF OPTICAL HEAD AND OPTICAL DISK**

(30) Priority: 21.01.2020 CN 202010070656
(71) Applicant: Amethystum Storage Technology Co., Ltd., Meizhou, Guangdong 514700 (CN)
(72) Inventor: ZHENG, Mu, Shejiang Town, Mei County, Meizhou, Guangdong 514700 (CN); LUO, Tiewei, Shejiang Town, Mei County, Meizhou, Guangdong 514700 (CN); TIAN, Jun, Shejiang Town, Mei County, Meizhou, Guangdong 514700 (CN); HU, Dejiao, Shejiang Town, Mei County, Meizhou, Guangdong 514700 (CN); LIU, Yicheng, Shejiang Town, Mei County, Meizhou, Guangdong 514700 (CN)
(74) Representative: Puschmann Borchert Kaiser Klettner Patentanwälte Partnerschaft mbB

(57) **Abstract**

The present invention relates to a method for accurately detecting and controlling a position of an optical head and an optical disk, and pertains to the technical field of optical holographic storage. According to the present invention, by utilizing the narrow shift selectivity of a spherical reference beam shift multiplexing technology, a control area that includes an x-direction position control unit and a y-direction position control unit and that is separated from a data area is formed in a storage medium. Like the data area, holograms of special patterns are recorded in the control area, when the data is read, information in the control area is read first, and the position of the optical head relative to the hologram in the data area can be detected in the x direction and the y direction respectively according to the information read by the hologram in the control area, so that reference light is controlled to the correct position shown by the address.

## Description

### TECHNICAL FIELD

The present invention relates to the technical field of optical holographic storage, and in particular, to a method for obtaining and accurately controlling the position between optical head and optical disk in a spherical reference beam shift multiplexing holographic storage system.

### BACKGROUND

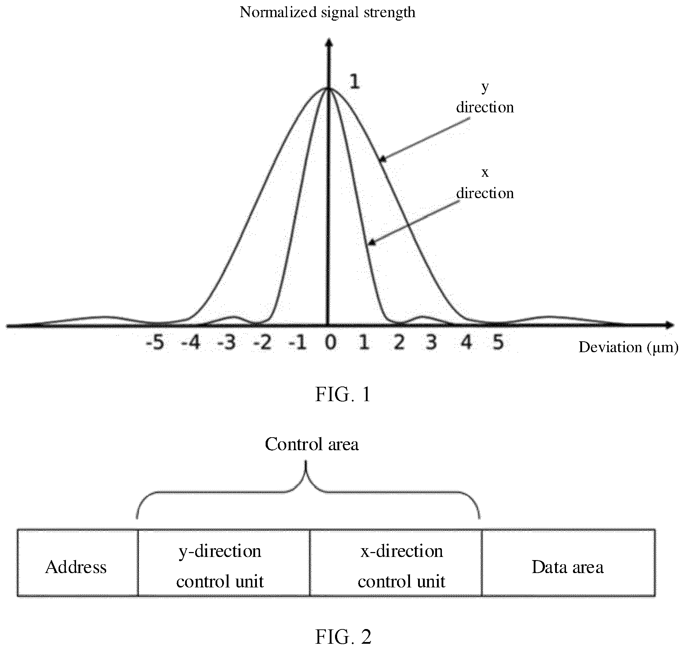

The spherical reference beam shift multiplexing technology has narrow shift selectivity, and can reduce the shift distance between adjacent holograms and increase the storage density. FIG. 1 shows the general shift selectivity of the spherical reference beam shift multiplexing method. The horizontal axis represents the deviation distance of the reference light reading position relative to the recorded hologram, and the vertical axis represents the normalized intensity of reconstructing light. X represents the direction of the optical track, and y represents the direction perpendicular to the optical track. Since the shift selectivity in spherical reference beam shift multiplexing method is narrow, the position accuracy of the reference beam needs to be high. Therefore, it is necessary to control the position of the reference light relative to the recorded hologram to accurately read data stored on the disk with low error rate.

### SUMMARY

The present invention aims to overcome at least one disadvantage of the prior art, and provides a method for accurately detecting and controlling a position of an optical head and optical disk to solve the problem of accurately controlling the position of the reference light relative to the recorded hologram when reading data stored on the optical disk.

According to the present invention, by utilizing the shift selectivity of the spherical reference beam shift multiplexing technology, a control area that includes an x-direction position control unit and a y-direction position control unit which is separated from a data area is formed in a storage medium. Like the data area, holograms of special patterns are recorded in the control area, when the data is read, information in the control area is read first, and the position deviation of the reference light relative to the hologram in the data area can be detected in the x direction and the y direction respectively according to the pattern read by the hologram in the control area, so that reference light is controlled to the correct position shown by the address.

The method for accurately detecting and controlling a position of an optical head and disk provided in the present invention includes the following steps:
(1) forming a holographic field at a recording position in the storage medium by a beam of spherical wave reference beam and a beam of signal-carrying signal beam for recording signal information;
(2) dividing a sector on the storage medium into a control area and a data area, where the control area includes an x-direction position control unit and a y-direction position control unit;
(3) equidistantly staggering the holograms in a direction perpendicular to an optical track, obtaining a position deviation signal through a difference in diffracted light intensity of these holograms, and controlling the position of the optical head and the optical disk accordingly, so that the position deviation signal of the y-direction position control area becomes 0; and
(4) staggering the holograms at a constant interval in the direction of the optical track, obtaining the position deviation signal through the difference in the diffracted light intensity of these holograms, and controlling the position of the optical head and the optical disk accordingly, so that the position deviation signal of the x-direction position control area becomes 0.

Specifically, the present invention relates to a method for accurately detecting and controlling a reading position of an optical disk for reading data stored in an optical disk as a storage medium, where data units stored in the storage medium include position control units, and the method includes: when reading a target data unit, first detecting whether the reading position is accurate through a position deviation signal formed by a position control unit of the target data unit, and controlling the reading position to an accurate position according to the position deviation signal and then reading data in the data unit. The optical disk reading position is an irradiation position of the reference light on the optical disk, also called an optical head position.

The position control units are a plurality of patterns staggered in the storage medium; at the accurate position, a light intensity difference of corresponding two patterns or two groups of patterns is 0 or a predetermined value, and the position deviation signal is the light intensity difference of the corresponding two patterns or two groups of patterns on the reading position.

The data units are sectors, and each sector includes at least an address area for storing address units, a control area for storing position control units, and a data area for storing data units.

The optical disk is a holographic storage medium; at least a part of data is stored in a shift multiplexing holographic storage mode; the method is used for reading this part of data; the position control units include an x-direction position control unit and a y-direction position control unit; and it is defined that the x direction is a shift direction of shift multiplexing holographic storage, and the y direction is perpendicular to the x direction.

The position control units are two holographic patterns or two groups of holographic patterns staggered in the storage medium; at the accurate position, a difference in the diffracted light intensity of corresponding two patterns or two groups of patterns is 0 or a predetermined value, and the position deviation signal is the difference in the diffracted light intensity of the corresponding two patterns or two groups of patterns on the reading position.

The accurate position in the y direction is located on a read optical track; on the optical track, a difference in the diffracted light intensity of corresponding two patterns or two groups of patterns is 0 or a predetermined value; and in the method, when the reading position is adjacent to the optical track, the position deviation signal is obtained by comparing the difference in the diffracted light intensity of the two holographic patterns or two groups of holographic patterns, and the reading position is controlled accordingly, so that the position deviation signal in the y direction becomes 0 or the predetermined value.

The position control unit in the y direction divides the plurality of holographic patterns into two groups, which are distributed on both sides of the optical track equidistantly from the optical track, and each group includes a plurality of holographic patterns arranged equidistantly.

The two groups of holographic patterns are staggered in a direction parallel to the optical track, and the staggered distance is a distance d moved in the data area during shift multiplexing.

The holographic patterns are circular, the two groups of holographic patterns are staggered with each other, and the optical track is located on a rotation symmetric center of the staggered area.

The controlling of the reading position refers to controlling the reading position to move up and down in a direction perpendicular to the optical track until the position deviation signal becomes 0 or a predetermined value.

The accurate position in the x direction is the position of point e, one of two points e and f, which are spaced apart by a shift multiplexing distance d on an optical axis during shift multiplexing; a distance between point e and starting point in the data area is an integer multiple of d; the difference in the diffracted light intensity of two patterns or two groups of patterns corresponding to points e and f is 0 or a predetermined value; and in the method, when the reading position is adjacent to point e, the diffracted light intensity of a holographic pattern at that position is read, the distance d is moved in the direction of point f along the optical axis, the diffracted light intensity of a holographic pattern at a new position is read, the position deviation signal is obtained by comparing the difference in the diffracted light intensity of two holographic patterns or two groups of holographic patterns, and the reading position is controlled accordingly, so that the position deviation signal in the x direction becomes 0 or a predetermined value.

The position control unit in the x direction divides the plurality of holographic patterns into two groups, which are arranged alternately and equidistantly along the optical track, and each group includes a plurality of holographic patterns arranged equidistantly.

The holographic patterns are circular, a distance between the centers of the two circular holographic patterns corresponding to points e and f is not equal to d, and the distance between the centers of the two circular holographic patterns corresponding to points e and f is less than d.

In the method of the present invention, the detection and control of the y direction are carried out first, and then the detection and control of the x direction are carried out.

An optical disk or a storage medium suitable for the above-mentioned method, where data units stored in the storage medium include position control units.

The position control units are a plurality of patterns staggered in the storage medium; and at the accurate position for aligning and reading the data units, a light intensity difference of corresponding two patterns or two groups of patterns is 0 or a predetermined value.

The data units are sectors, and each sector includes at least an address area for storing address units, a control area for storing position control units, and a data area for storing data units.

The optical disk is a holographic storage medium; at least a part of data is stored in a shift multiplexing holographic storage mode; the position control units include an x-direction position control unit and a y-direction position control unit; and it is defined that the x direction is a shift direction of shift multiplexing holographic storage, and the y direction is perpendicular to the x direction.

The position control units are two holographic patterns or two groups of holographic patterns staggered in the storage medium; and at the accurate position, a difference in the diffracted light intensity of corresponding two patterns or two groups of patterns is 0 or a predetermined value.

The accurate position in the y direction is located on the optical track read by the data unit, and on the optical track, a difference in the diffracted light intensity of corresponding two patterns or two groups of patterns is 0 or a predetermined value.

The position control unit in the y direction divides the plurality of holographic patterns into two groups, which are distributed on both sides of the optical track equidistantly from the optical track, and each group includes a plurality of holographic patterns arranged equidistantly.

The two groups of holographic patterns are staggered in a direction parallel to the optical track, and the staggered distance is a distance d moved in the data area during shift multiplexing.

The holographic patterns are circular, the two groups of holographic patterns are staggered with each other, and the optical track is located on a rotation symmetric center of the staggered area.

The accurate position in the x direction is a position of point e, one of two points e and f, which are spaced apart by a distance d moved during shift multiplexing, on an optical axis; a distance between point e and a starting point in the data area is an integer multiple of d; and the difference in the diffracted light intensity of two patterns or two groups of patterns corresponding to points e and f is 0 or a predetermined value.

The position control unit in the x direction divides the plurality of holographic patterns into two groups, which are arranged alternately and equidistantly along the optical track, and each group includes a plurality of holographic patterns arranged equidistantly.

The holographic patterns are circular, and the distance between the centers of the two circular holographic patterns corresponding to points e and f is not equal to d.

The distance between the centers of the two circular holographic patterns corresponding to points e and f is less than d.

A device for accurately detecting and controlling a reading position of an optical disk suitable for the above-mentioned method and optical disk, including:
an optical system, configured to read data on an optical disk;
a translation stage, configured to support the optical disk in translation;
further including a comparator, configured to compare a difference between two position deviation signals or two groups of position deviation signals read by the optical system from the optical disk, and drive the translation stage to support the optical disk in translation according to the difference, until the difference meets a requirement.

The optical system is a reference light system of a holographic storage reading system, and the position deviation signals compared by the comparator are the diffracted light intensity of different patterns at the same position and/or the diffracted light intensity of two patterns spaced apart by a distance moved during holographic storage shift multiplexing.

The translation stage includes an x-direction translation mechanism and a y-direction translation mechanism. The x-direction translation mechanism is configured to control the translation stage to support the optical disk in translation in the moving direction of the optical disk for shift multiplexing, and the y-direction translation mechanism is configured to control the translation stage to support the optical disk in translation in the direction perpendicular to the x direction.

The x-direction translation mechanism further includes a stepping translation mechanism, configured to control the translation stage to support the optical disk in translation in the x direction with the distance moved during the holographic storage shift multiplexing as the stepping distance.

The translation stage also includes a preliminary positioning mechanism, configured to control the translation stage to support the optical disk in movement, and control the control area of any sector of the optical disk to be aligned with the position of the optical head and the optical system.

The preliminary positioning mechanism includes a translation and/or rotation and/or turnover positioning mechanism.

Compared with the prior art, the present invention brings the following beneficial effects: The position of the reference light relative to the recorded hologram is accurately controlled when data on the optical disk is read, so that the irradiation position of the optical head can be accurately aligned with the optical track of the hologram, and real-time dynamic adjustment can be implemented in the reading process, thereby reducing deviation caused by the machine.

### BRIEF DESCRIPTION OF DRAWINGS

FIG. 1 shows a shift selectivity curve of a reading hologram;
FIG. 2 is a schematic diagram of a data distribution mode of one sector on a recording medium;
FIG. 3 is a schematic diagram of position deviation detection for an optical head in a y direction;
FIG. 4 is a block diagram of position control for an optical head in a y direction;
FIG. 5 is a schematic diagram of position deviation detection for an optical head in an x direction; and
FIG. 6 is a block diagram of position control for an optical head in an x direction.

### DESCRIPTION OF EMBODIMENTS

The following clearly and completely describes the technical solutions in the embodiments of the present invention with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention.

The drawings of the present invention are only for illustrative description and cannot be construed as limiting the present invention. To better illustrate the following embodiments, some components in the drawings may be omitted, enlarged or downscaled, and do not represent the size of the actual product. For a person skilled in the art, it can be understood that some well-known structures and descriptions thereof in the drawings may be omitted.

### Product embodiment

In order to control the optical head, a control area separated from the data area is formed in the storage medium, as shown in FIG. 2. FIG. 2 shows an example of data distribution for a sector on the storage medium, where the control area is divided into an x-direction position control unit and a y-direction position control unit. Like the data area, holograms with special patterns are recorded in the control area. The holograms can be recorded simultaneously with the data, and can also be formatted before the data is recorded. When the data is read, information in the control area is read first, and the position deviation of the reference light relative to the hologram in the data area can be detected in the x direction and the y direction respectively according to the pattern read by the hologram in the control area, so that the reference light is controlled to the correct position shown by the address.

In the optical disk or storage medium described above, each sector includes an address area for storing address units, a control area for storing position control units, and a data area for storing data units. The position control units include an x-direction position control unit and a y-direction position control unit. It is defined that the x direction is a shift direction of shift multiplexing holographic storage, and the y direction is perpendicular to the x direction.

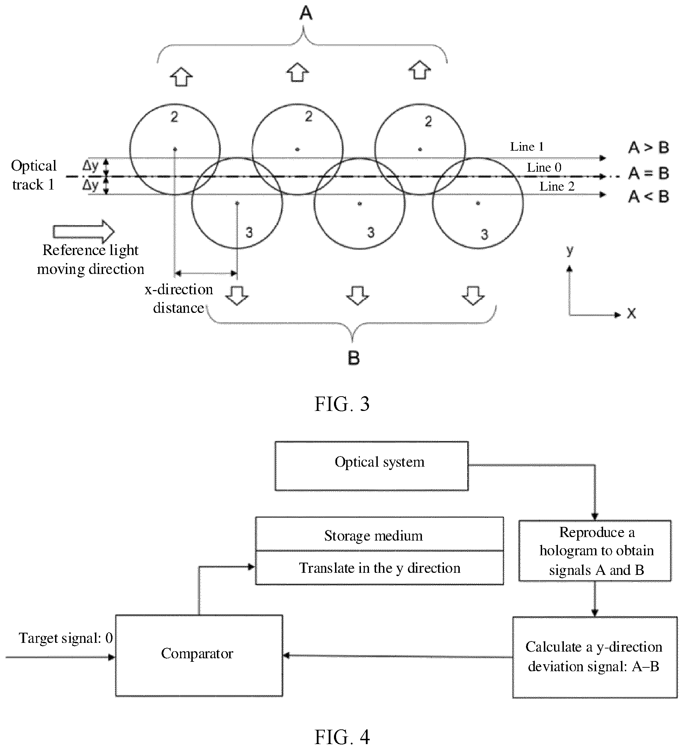

The accurate position in the y direction is located on the optical track read by the data unit. As shown in FIG. 3, the holographic patterns are circular, the two groups of holographic patterns are staggered with each other, and the optical track is located on a rotation symmetric center of the staggered area. As shown in the figure, on the optical track, the plurality of holographic patterns are divided into two groups, which are distributed on the upper and lower sides of the optical track equidistantly from the optical track, and the left and right staggered distance is the distance d moved in the data area during shift multiplexing, and the distance d is the "x-direction distance" shown in the figure. When the reference light is located on the optical track and moves along the optical track, the difference in the diffracted light intensity of the two groups of patterns is 0.

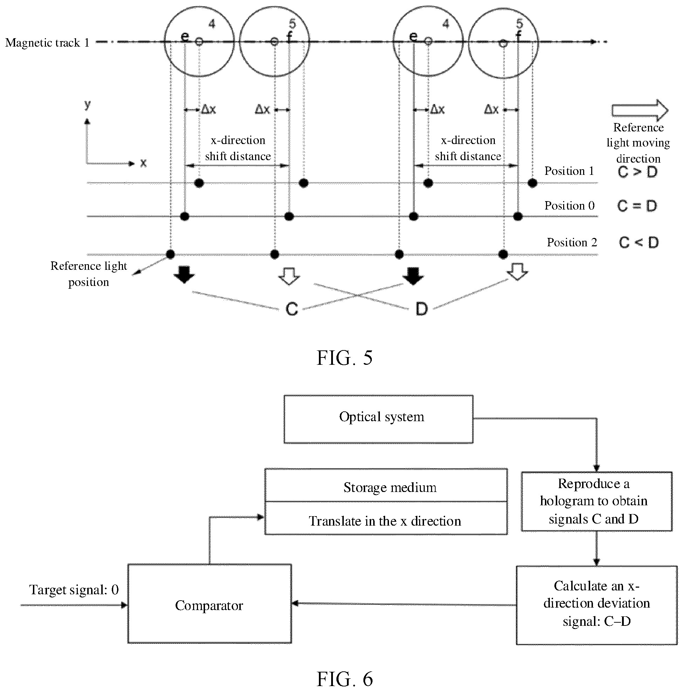

The accurate position in the x direction is a position of a point e(e.g., the position on the left side of the center of hologram 4) in two points e and f (e.g., the positions corresponding to solid lines outside the centers of holograms 4 and 5 in FIG. 5), which are spaced apart by a distance d moved during shift multiplexing. A distance between this position and a starting point in the data area is an integer multiple of d. For the two points e and f on the left and right sides of the centers of the holograms 4 and 5, the difference in the diffracted light intensity of the reference light at these two positions is 0.

### Method embodiment

First, the principle for detecting the position deviation of the y-direction control unit is shown in FIG. 3. The vertical distance between the center of the hologram and the optical track 1 is Δy, and the distance of each hologram in the x direction is Δx. From the perspective of saving space, an appropriate range of Δy is determined according to the shift selectivity in the y direction, and Δx is set to the same value as the distance moved in the data area during shift multiplexing. The signal in the control area is read out in the same way as the data is read, and the readout signals of hologram 2 shifted upward and hologram 3 shifted downward are denoted by A and B, respectively. When the reference beam moves on line 1 close to hologram 2, A>B can be obtained. When the reference beam moves on line 2 close to hologram 3, A<B can be obtained. When the reference beam moves on line 0 equidistant from hologram 2 and hologram 3, A=B is obtained. Therefore, the position deviation signal in the y direction can be obtained by calculating A-B, and the reference beam position in the y direction can be controlled so that the position deviation is 0.

Next, the principle for detecting the position deviation of the x-direction control unit is shown in FIG. 5, and the reference light position, that is, the position of the optical head is indicated by an upward arrow. In the recording and reading process, the storage medium continuously shifts and stops in the x direction, and records and reads the hologram at the stopped position, so the difference between the position of the reference light and the position at which the storage medium is stopped to record the hologram in the x direction may cause signal deviation. In the x-direction position control unit, the set interval of the holograms on a guide rail is the same as the interval of the holograms in the data unit, and Δx represents the deviation of the position of the actually recorded hologram in the control unit from the preset position, and the appropriate size of Δx is determined by the shift selectivity in the x-axis direction. The signal in the control area is read out in the same way as the hologram in the data area is read, and the readout signals of hologram 4 shifted rightward and hologram 5 shifted leftward are denoted by C and D, respectively. When the reference beam is at position 1, C>D can be obtained, respectively. When the reference beam is at position 2, C<D is obtained. When the reference beam is at position 0, C=D is obtained. Therefore, the position deviation signal in the x direction can be obtained by calculating C-D, and the reference beam position in the x direction can be controlled so that the position deviation is 0.

In the method of the present invention, the detection and control of the y direction are carried out first, and then the detection and control of the x direction are carried out.

### Device embodiment

FIG. 4 is a flowchart of position control for a reference beam in a y direction. The A and B signals of the y-direction position control unit in the storage medium are detected and read by the reference light in the optical system, and the value of A-B is calculated using the read signals to obtain the position deviation signal of the reference light. The comparator is configured to evaluate the difference between the position deviation signal and its target value 0, and then guide the y-direction translation stage fixed with the storage medium in translation, so that the position deviation signal becomes 0. This is the feedback control completed in the y-direction position control unit, and then the position of the y-direction translation stage obtained by the y-direction position control unit is used to read the hologram in the data area.

FIG. 6 is a flowchart of position control for a reference beam in an x direction. The C and D signals of the x-direction position control unit in the storage medium are detected and read by the reference light in the optical system, and the value of C-D is calculated using the read signals to obtain the position deviation signal of the reference light. The comparator is configured to evaluate the difference between the position deviation signal and its target value 0, and then guide the x-direction translation stage fixed with the storage medium in translation, so that the position deviation signal becomes 0. This is the feedback control completed in the x-direction position control unit, and then the position of the x-direction translation stage obtained by the x-direction position control unit is used to read the hologram in the data area.

Based on the above working principle, the present invention is used to implement a device for accurately detecting and controlling a position of an optical head of an optical disk and a reading position of an optical disk, including: an optical system configured to read data on the optical disk, and a translation stage configured to support the optical disk in translation, and further including a comparator shown in FIGs. 4 and 6, configured to compare a difference between two groups of position deviation signals read by the optical system from the optical disk, and drive the translation stage to support the optical disk in translation according to the difference, until the difference meets a requirement.

The optical system is a reference light system of a holographic storage reading system. In the y direction, the position deviation signals compared by the comparator are the diffracted light intensity of two groups of patterns 2 and 3 above and below the optical axis. In the x direction, the position deviation signals compared by the comparator are the diffracted light intensity of two groups of patterns 4 and 5 corresponding to two positions e and f spaced apart by a distance moved along the optical axis during holographic storage shift multiplexing.

In order to implement the preliminary positioning of the optical head at the position of reading the corresponding sector, the translation stage further includes a preliminary positioning mechanism, configured to control the translation stage to support the optical disk in movement, and control the control area of any sector of the optical disk to be aligned with the position of the optical head and the optical system.

For optical disks stored in different storage methods, the preliminary positioning mechanism includes a translation and/or rotation and/or turnover positioning mechanism, which is suitable for circular optical disks or rectangular memory cards, including a single-sided storage mode or a double-sided storage mode, and suitable for storage media with a plurality of multiplexing storage modes such as shift multiplexing, angle multiplexing, angle-shift multiplexing, superposition multiplexing, and cross multiplexing.

Apparently, the above-mentioned embodiments of the present invention are merely examples to clearly illustrate the technical solutions of the present invention, and are not intended to limit the specific embodiments of the present invention. Any modifications, equivalent replacements, and improvements, etc. made within the spirit and principle of the claims of the present invention shall fall within the protection scope of the claims of the present invention.

## Claims

1. A method for accurately detecting and controlling a position of an optical head of an optical disk, wherein a spherical wave is used as reference light for cross-shift multiplexing holographic storage, and a position deviation signal is obtained by using holograms staggered in a position control unit in a storage medium for accurate detection and control of the position of the optical head.

2. The method for accurately detecting and controlling a position of an optical head of an optical disk according to claim 1, wherein a sector on the storage medium is divided into a control area and a data area, and the control area comprises an x-direction position control unit and a y-direction position control unit.

3. The method for accurately detecting and controlling a position of an optical head of an optical disk according to claim 2, wherein the holograms are staggered equidistantly in a direction perpendicular to an optical track, the position deviation signal is obtained through a difference in diffracted light intensity of these holograms, and the position of the optical head and the optical disk is controlled accordingly, so that the position deviation signal of the y-direction position control area becomes 0.

4. The method for accurately detecting and controlling a position of an optical head of an optical disk according to claim 2 or 3, wherein the holograms are staggered at a constant interval in a direction of an optical track, the position deviation signal is obtained through a difference in diffracted light intensity of these holograms, and the position of the optical head and the optical disk is controlled accordingly, so that the position deviation signal of the x-direction position control area becomes 0.

5. A method for accurately detecting and controlling a reading position of an optical disk for reading data stored in an optical disk as a storage medium, wherein data units stored in the storage medium comprise position control units, and the method comprises: when reading a target data unit, first detecting whether the reading position is accurate through a position deviation signal formed by a position control unit of the target data unit, and controlling the reading position to an accurate position according to the position deviation signal and then reading data in the data unit.

6. The method for accurately detecting and controlling a reading position of an optical disk according to claim 5, wherein the position control units are a plurality of patterns staggered in the storage medium; at the accurate position, a light intensity difference of corresponding two patterns or two groups of patterns is 0 or a predetermined value, and the position deviation signal is the light intensity difference of the corresponding two patterns or two groups of patterns on the reading position.

7. The method for accurately detecting and controlling a reading position of an optical disk according to claim 5 or 6, wherein the data units are sectors, and each sector comprises at least an address area for storing address units, a control area for storing position control units, and a data area for storing data units.

8. The method for accurately detecting and controlling a reading position of an optical disk according to any one of claims 5 to 7, wherein at least a part of data is stored in a shift multiplexing holographic storage mode; the method is used for reading this part of data; the position control units comprise an x-direction position control unit and a y-direction position control unit; the x direction is a shift direction of shift multiplexing holographic storage, and the y direction is perpendicular to the x direction.

9. The method for accurately detecting and controlling a reading position of an optical disk according to claim 8, wherein the accurate position in the y direction is located on a read optical track; on the optical track, a difference in diffracted light intensity of corresponding two patterns or two groups of patterns is 0 or a predetermined value; when the reading position is adjacent to the optical track, the position deviation signal is obtained by comparing the difference in the diffracted light intensity of the two holographic patterns or two groups of holographic patterns, and the reading position is controlled accordingly, so that the position deviation signal in the y direction becomes 0 or the predetermined value.

10. The method for accurately detecting and controlling a reading position of an optical disk according to claim 8 or 9, wherein the position control unit in the y direction divides the plurality of holographic patterns into two groups, which are distributed on both sides of the optical track equidistantly from the optical track, and each group comprises a plurality of holographic patterns arranged equidistantly, and
the two groups of holographic patterns are staggered in a direction parallel to the optical track, and the staggered distance is a distance d moved in the data area during shift multiplexing.

11. The method for accurately detecting and controlling a reading position of an optical disk according to claim 10, wherein the holographic patterns are circular, the two groups of holographic patterns are staggered with each other, and the optical track is located on a rotation symmetric center of the staggered area.

12. The method for accurately detecting and controlling a reading position of an optical disk according to any one of claims 9 to 11, wherein controlling the reading position refers to controlling the reading position to move up and down in a direction perpendicular to the optical track until the position deviation signal becomes 0/predetermined value 0 or a predetermined value.

13. The method for accurately detecting and controlling a reading position of an optical disk according to claim 8, wherein the accurate position in the x direction is a position of one of a first point and a second point, which are spaced apart by a distance d moved during shift multiplexing, on an optical axis; a distance between this point and a starting point in the data area is an integer multiple of d; the difference in the diffracted light intensity of the two patterns or two groups of patterns corresponding to these two points is 0 or a predetermined value; when the reading position is adjacent to the first point, the diffracted light intensity of a holographic pattern at that position is read, the distance d is moved in the direction of the second point along the optical axis, the diffracted light intensity of a holographic pattern at a new position is read, the position deviation signal is obtained by comparing the difference in the diffracted light intensity of two holographic patterns or two groups of holographic patterns, and the reading position is controlled accordingly, so that the position deviation signal in the x direction becomes 0 or a predetermined value.

14. The method for accurately detecting and controlling a reading position of an optical disk according to claim 13, wherein the position control unit in the x direction divides the plurality of holographic patterns into two groups, which are arranged alternately and equidistantly along the optical track, and each group comprises a plurality of holographic patterns arranged equidistantly, and
the holographic patterns are circular, and a distance between the centers of two circular holographic patterns corresponding to the first point and the second point is not equal to d.

15. A device for accurately detecting and controlling a reading position of an optical disk, comprising:
an optical system, configured to read data on an optical disk;
the optical disk, configured to store position control units; and
a translation stage, configured to support the optical disk in translation;
further comprising a comparator, configured to compare a difference between two position deviation signals or two groups of position deviation signals read by the optical system from the optical disk, and drive the translation stage to support the optical disk in translation according to the difference, until the difference meets a requirement, and
the position deviation signals compared by the comparator are the diffracted light intensity of different patterns at the same position and/or the diffracted light intensity of two patterns spaced apart by a distance moved during holographic storage shift multiplexing.
